# EUROPEAN PATENT APPLICATION

(11) **EP 4 699 790 A1**
(43) Date of publication of application: **25.02.2026**
(21) Application number: 25199356.4
(22) Date of filing: 01.09.2025
(51) Int. Cl.: B29C 65/20, E06B 3/96

(54) **WELD FORM DEVICE FOR JOINING PLASTIC ELEMENTS, ESPECIALLY WINDOW OR DOOR FRAMES. MACHINE FOR WELDING ELEMENTS AND METHOD FOR WELDING PROFILE ELEMENTS**

(71) Applicant: Awgtech Spolka z Ograniczona Odpowiedzialnoscia, 48-303 Nysa (PL)
(72) Inventor: Wojtasik, Kamil, Nysa (PL)
(74) Representative: AOMB Polska Sp. z.o.o.

(57) **Abstract**

The invention relates to a weld forming device for joining plastic profile elements, especially window or door frames, including a forming tool (5) comprises forming edges (5a, 5b) configured to adhere to the surface of outer side walls (4) in the area of an outer side corner (C) when two profile elements (P) contact with their end faces (W), and a control unit configured to move the forming tool (5) along a forming path (T) defined by am outer side welding line (L). The invention relates also to a machine and a method for welding profile elements.

## Description

### Technical Field

The invention belongs generally to the field of joinery, and in particular to the technology of manufacturing window or door frames. More specifically, the invention relates to a weld forming device for joining plastic profile elements, especially window or door frames, a machine for welding profile elements and a method for welding profile elements.

### Background art

Window or door frames are manufactured by joining profile elements made of plastic, most often PVC. For this purpose, the ends of the profile elements, usually cut at a 45-degree angle, are heated to plasticize the material and the end faces are pressed together along the joined edges. The plasticized materials of the profile elements mix with each other under pressure and/or due to vibrations and after solidification by cooling, they are permanently joined.

There are many tools, devices and machines for manufacturing window and door frames known in the art.

Currently used machines even allow for simultaneous welding of all four profile elements in one step. This type of machine includes four stations equipped with welding devices which work in a coordinated manner under the control of a central control unit. Each welding device comprises, inter alia, a frame, a pair of support or holding elements configured to fasten or hold plastic profile elements, a heating module with a heating plate for heating the end faces being joined, moving elements in the form of pneumatic actuators or servo-mechanisms for moving the profile elements, for bringing the profile elements into a position in which the end faces being joined are in contact with each other and for pressing them together.

Additionally, known devices and machines can be equipped with various modules and supporting tools for mechanical and finishing machining, which, for example, form the weld, remove flash, reduce flash formation or cut seals.

Such devices and machines are disclosed in EP3481620A1, EP3132917A1, EP3117981A1.

When welding profile elements along the welding line, i.e. the line defined by the contacting edges at the end face, a flash is created as a result of the plasticization of the material and pressing together the profile elements, which flash must be properly formed into a weld and its excess must be removed after cooling and permanent joining of the profile elements, for example by milling, to ensure an aesthetically pleasing weld. To form a weld, known devices use tools in the form of forming elements, which usually have the form of a counter-mould that precisely reflects the shape of the outer corner of the profile elements being welded.

For example, the European patent application EP3117981A1 discloses a device for welding profiles comprising lateral containment elements adapted to abut the surfaces being welded at the first lateral edge to confine the bead and comprising a V-shaped element having two V-shaped sides arranged in a V pattern which are adapted to abut at least a portion of respective first lateral edges of the profiled elements.

PL228117B1 discloses a device for welding plastic profiles, comprising a head with a heating plate for welding window frame members arranged on external guides. The head comprises interchangeable internal forming punches arranged symmetrically relative to the heating plate, movable in direction parallel to the main plane of the heating plate, containing a flange-bounded weld recess in a plane parallel to the main plane of the heating plate.

### Technical problem

When welding PVC profiles using known tools and methods, imperfect weld or uneven welding surface may be produced, leading to reduced joint strength and defective finish.

Due to material imperfections and incorrect welding process parameters, such as heating of profile elements to an inappropriate temperature (usually too low), too short welding time, or inadequate pressing force, micro-gaps, i.e. voids, may appear along the welding line, i.e. along the contacting edges at the end faces being joined. These micro-gaps are defects that can negatively impact the functionality, aesthetics and durability of the final product, as well as customer satisfaction, including the need for product disposal, which translates into additional costs.

Known tools for forming a weld, or flash, require that precisely manufactured elements are used that reflect the outer geometry of the corner of the profiles being joined. This is because the outer side edges, which run perpendicular to the main plane of the window or door frame, are usually not straight, but form in the cross-section a broken line consisting of multiple sections connected at right angles. The slightest deviations resulting from imperfections and lack of repeatability in the profile geometry can lead to incorrect or unsightly welds. Further, when welding profiles of different shapes, the machine must be retooled each time and the forming punches configured for the specific corner shape and the support blocks placed on the tops of the welding devices must be replaced, which can lead to longer production downtimes due to the need to produce new specialized tools. This problem has not yet been solved.

### Objective of the invention

The objective of the present invention is to at least partially eliminate the aforementioned drawbacks of the prior art.

Another objective of the invention is to provide a weld forming device that will be universal, i.e. it will allow welding of profile elements with different shapes of outer corners without the need to change forming tools.

### Summary of the invention

According to a first aspect of the invention, there is provided a weld forming device for joining plastic profile elements, especially window or door frames, wherein said profile elements comprise:
an end face formed by cutting one end of a profile element, preferably at a 45-degree angle,
wherein said end face is determined by:
   an inner side edge on the inner perimeter of the window or door frame and an outer side edge on the outer perimeter of the window or door frame, said inner side edge and outer side edge extending substantially perpendicular to the main plane of the assembled window or door frame,
   a front edge and a rear edge extending substantially parallel to the main plane of the assembled window or door frame,
   wherein when the two profile elements are in contact with their end faces, the surfaces of the outer side walls form an outer side corner while the outer side edges define an outer side welding line;
a front wall and a rear wall, which extend substantially in the main plane of the assembled window or door frame;
an inner side wall on the inner perimeter of the assembled window or door frame and an outer side wall on the outer perimeter of the assembled window or door frame, said inner side wall and outer side wall extending substantially perpendicular to the main plane of the assembled window frame;
wherein said device comprises:
   a forming tool for forming a weld;
   moving means configured to move the forming tool at least in the X and Y axes of the Cartesian coordinate system;
   a control unit configured to control the weld forming device and comprising at least a processor and a memory;
   wherein the forming tool comprises forming edges configured to adhere to the surfaces of the outer side walls in the area of the outer side corner when the two profile elements are in contact with their end faces,
   wherein the control unit is configured to move the forming tool along the forming path defined by the outer side welding line.

In one embodiment, the forming edges run in a V-shape, preferably at a right angle.

In another embodiment, the forming edges have a triangular, rectangular, or circular shape in the cross-section.

In one embodiment, the forming tool is in the form of a flat plate terminating with forming edges.

The forming tool can be made of aluminium or high-temperature-resistant metal alloys, or a ceramic material or carbide, or any combination thereof.

Preferably, the forming tool is coated with a high-temperature-resistant non-stick coating, e.g. a coating containing Teflon (PTFE).

In one embodiment, the control unit comprises the forming path stored in the memory.

In one embodiment, the moving means are in the form of servo drives or linear actuators.

According to a second aspect of the invention, there is provided a machine for welding plastic profile elements, especially window or door frames, comprising:
a base frame;
a positioning and pressing system equipped with:
   holding members configured to hold and stabilize the profile elements during welding,
   drive means connected to the holding members for moving the profile elements between a first position in which the end faces of the profile elements being welded are in contact with each other, and a second position in which the end faces of the profile elements being welded are spaced apart, and configured for pressing together the end faces that have been heated;
   a heating module with a heating plate configured to heat the end faces of the profile elements to plasticize the material in their area;
   a main control unit configured to control the machine and comprising at least a processor and a memory;
   a forming device according to the invention.

In one embodiment, the machine comprises a source of vibration in the form of a vibration generator, which is attached to the heating module.

In one embodiment, the forming tool is attached to the heating module, preferably to the heating plate.

In one embodiment, the machine comprises cooling means configured to cool the previously formed weld.

According to a third aspect of the invention, there is provided a method of welding plastic profile elements, in particular window or door frames, using a weld forming device defined according to the first invention, in which method at least two profile elements are welded, comprising:
an end face formed by cutting one end of a profile element, preferably at a 45-degree angle,
wherein said end face is determined by:
   an inner side edge on the inner perimeter of the window or door frame and an outer side edge on the outer perimeter of the window or door frame, said inner side edge and outer side edge extending substantially perpendicular to the main plane of the assembled window or door frame,
   a front edge and a rear edge extending substantially parallel to the main plane of the assembled window or door frame,
   wherein when the two profile elements are in contact with their end faces, the surfaces of the outer side walls form an outer side corner and the outer side edges define an outer side welding line;
a front wall and a rear wall, which extend substantially in the main plane of the assembled window or door frame;
an inner side wall on the inner perimeter of the assembled window or door frame and an outer side wall on the outer perimeter of the assembled window or door frame, said inner side wall and outer side wall extending substantially perpendicular to the main plane of the assembled window frame;
wherein said method comprises at least the step of heating the end faces until the material in their area is plasticized and pressing the heated end faces together or only the step of heating the previously joined profile elements in the area of the outer side corner,
wherein the method further comprises the following substeps:
   f.1) moving a forming tool so that forming edges adhere to the surface of the outer side walls in the area of the outer side corner,
   f.2) moving a forming tool along a forming path defined by the outer side welding line until the desired weld is formed and/or the micro-gaps between the outer side edges are closed.

**In** one embodiment, the method comprises the following steps performed by a machine according to the second invention:
a) placing the profile elements in a positioning and pressing system,
b) inserting a heating plate between the end faces of the profile elements being joined,
c) pressing the profile elements against the heating plate,
d) moving the profile elements apart and withdrawing the heating plate,
e) bringing the heated end faces into contact with a predefined force,
f) forming a weld using the at least one forming tool,
g) cooling the weld,
h) releasing holding members of the positioning and pressing system, and removing the welded profile elements,
wherein in step f) substeps f.1) and f.2) are performed.

In one embodiment, step f.2) is performed when the temperature of the materials being joined in the area of the weld being formed is in the range of 120-140 degrees Celsius.

### Advantageous effects of the invention

The invention eliminates the need to manufacture forming tools tailored to the varying geometries of the outer corners of the joined profile elements.

The ability to easily and quickly program a custom forming path reduces downtime and material losses resulting from unsightly welds. The invention also allows for dynamic correction during the welding process.

The invention allows for the complete closure of micro-gaps formed along the outer edges of the corner formed by the side walls joined at right angle.

An additional advantage of the invention is that there is no need to use a tool to clean the corners after processing, as all the necessary operations are performed during a single welding cycle.

The invention enables both hot and cold corner forming.

### Brief description drawings

The subject matter of the invention will be explained in more detail with reference to the attached drawings, wherein:
Fig. 1 - shows a profile element in an axonometric view,
Fig. 2 - shows a weld forming device according to the invention in an axonometric view,
Fig. 3 - shows a fragment of the weld forming device from Fig. 1 in an enlarged view,
Fig. 4 - shows a forming tool in an axonometric view,
Fig. 5 - shows the forming tool attached to a holder in an axonometric view,
Fig. 6 - shows the forming tool with the welded profile elements in a bottom view,
Fig. 7- shows a forming path with the forming tool visible in the starting position,
Fig. 8 - shows a machine for welding profile elements according to the invention in an axonometric view.

### Detailed description of preferred embodiment

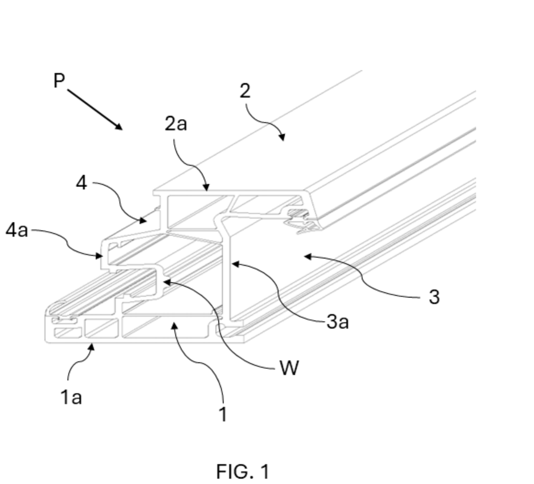

With reference to Figs. 1-7 a weld forming device according to a first embodiment of the invention will be discussed.

The weld forming device is used for welding profile elements P. Fig. 1 shows an example of a profile element comprising:
an end face W formed by cutting one end of a profile element P, preferably at a 45-degree angle, said end face W being determined by:
   an inner side edge 3a on the inner perimeter of the window or door frame and an outer side edge 4a on the outer perimeter of the window or door frame, said inner side edge 3a and outer side edge 4a extending substantially perpendicular to the main plane of the assembled window or door frame,
   a front edge 1a and a rear edge 2a extending substantially parallel to the main plane of the assembled window or door frame,
   wherein when the two profile elements P are in contact with their end faces W, the surfaces of the outer side walls 4 lying at the right angle to each other form an outer side corner C and the outer side edges 4a define an outer side welding line L;
a front wall 1 and a rear wall2, which extend substantially in the main plane of the assembled window or door frame;
an inner side wall 3 on the inner perimeter of the assembled window or door frame and an outer side wall 4 on the outer perimeter of the assembled window or door frame, said inner side wall 3 and outer side wall 4 extending substantially perpendicular to the main plane of the assembled window or door frame.

The profile elements P are made of plastic, preferably PVC. They are used to assemble rectangular window or door frames, which are then part of window or door sashes, which in turn are typically hinged to architraves or door frames in wall openings.

The weld forming device may be a standalone device used in the process of welding profile elements **P,** or it may be part of a larger device or machine used to weld complete window and door frames.

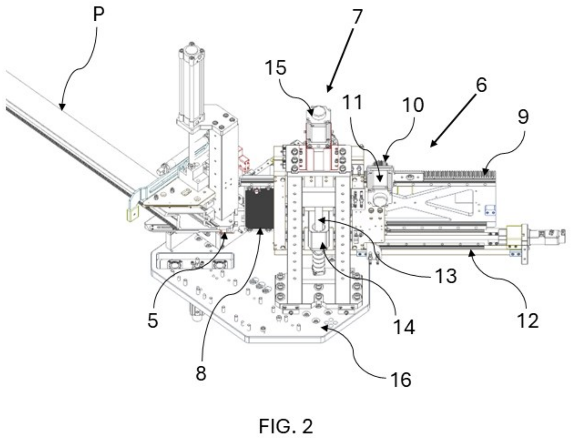

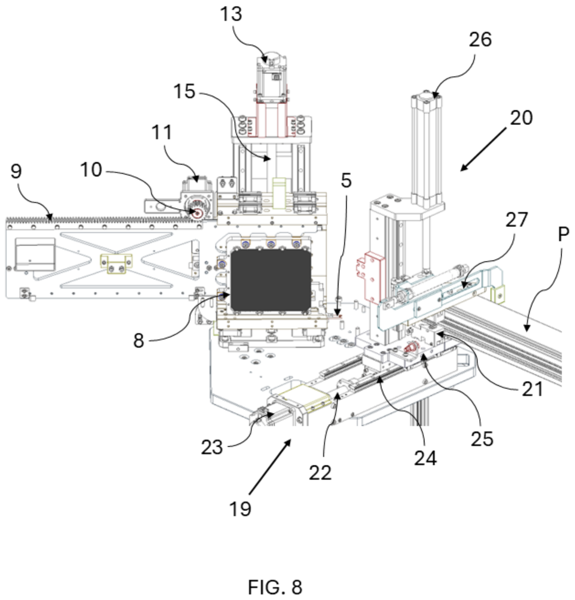

In a preferred embodiment illustrated in Fig. 2, the weld forming device is part of a larger device for welding profile elements in the form of a station enabling welding of a single corner. For reasons of clarity and better understanding, some of the components shown in Figs. 2-3, such as a positioning and pressing system or a heating module, will be described in more detail in the exemplary embodiment illustrating the machine for welding profile elements from Fig. 8. It will be obvious to those skilled in the art, however, that a weld forming device may be a standalone device that cooperates with a machine for welding profile elements. The weld forming device generally comprises such elements as a forming tool 5 for forming a weld, moving means 6, 7 configured to move the forming tool 5 at least in the X and Y axes of the Cartesian coordinate system, and a control unit configured to control the forming device and comprising at least a processor and a memory. Some or all of the above-mentioned components, as well as other additional equipment, are preferably mounted on a supporting structure, which may be, for example, a frame, a base, a column, or a housing. When integrating a weld forming device with a machine for welding profile elements, the supporting structure can be either the base frame of the machine or the structure of one of the machine's modules, e.g., the heating module. Preferably, in the latter case, the components of the weld forming device are mounted on a work table 16 which is mounted on the base frame (not shown).

The control unit may be a computing device commonly known in the art, such as a computer, tablet, server, laptop, smartphone, microprocessor-based programmable logic controller (PLC), and others.

The control unit is configured to move the forming tool 5 along a forming path T defined by the outer side welding line (L).

The control unit includes components such as a processor capable of processing data and executing instructions stored in the computer's memory; a memory containing application software run by the processor and containing instructions executed by the processor; and software stored in the memory for controlling the operation of the device. One or more forming paths (T) may be stored in the memory. Alternatively, the forming paths (T) may be stored in a database that is part of the control unit of the weld forming device or the machine for welding profiles, or the database may be stored in a virtual space in a cloud computing environment to which the device or machine is remotely connected.

The processor preferably runs software, processes data, communicates with other devices, and executes instructions according to the operations stored in the computer memory.

The memory is preferably a non-volatile flash computer memory that stores the operating system, application software, and database. A program or application for controlling the device by the user may be stored in the computer memory. In some embodiments, the control unit may include only or additionally a volatile RAM memory in which the forming paths are stored.

Preferably, a file is stored in the computer memory that may contain instructions for the processor, such as the coordinates of a travel of the forming tool 5 along the forming path T, position, speed, and direction of the forming tool5. The travel coordinates of the forming tool 5 may be obtained from manufacturers of profile elements P generated from CAD or CAM programs. The coordinates can also be acquired using known techniques for creating three-dimensional digital objects based on a physical, real-world object. An example of such a device is a 3D scanner, which can be used to obtain coordinates for precise determination of the forming path T of the forming tool 5. In one embodiment, the weld forming device or machine for welding can be equipped with a 3D scanner, which can be used to pre-define the coordinates of the forming path T.

When a weld forming device is implemented in a machine for welding profile elements, the control unit can cooperate with the machine's main control unit, which acts then as a master controller. Alternatively, the machine's main control unit can completely replace the control unit of the weld forming device. The latter option is more preferred.

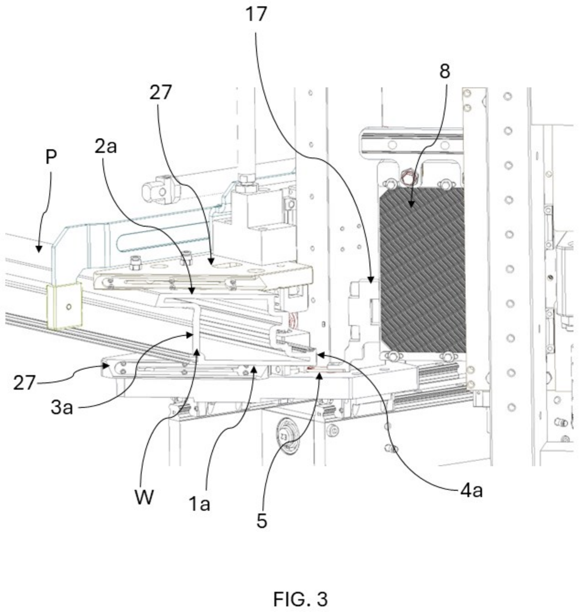

The moving means 6, 7 include known linear drive systems that allow the forming tool 5 to be moved at least in the X and Y axes of the Cartesian coordinate system. These may be, for example, linear servo drives or linear actuators. The moving means 6, 7 are preferably attached to a support structure. An embodiment of the moving means 6, 7 is illustrated in Fig. 2. These include a horizontal displacement unit 6 for moving the forming tool 5 in the X axis and a vertical displacement unit for moving the forming tool in the Y axis. The horizontal displacement unit 6 is a linear module comprising a pinion 9, a rack 10 coupled to the pinion 9, an electric motor 11 driving the rack 10, and a guide 12 along which the heating module with the heating plate 8 moves. The horizontal displacement unit 6 is in the form of a linear column comprising a lead screw 13 (e.g. a ball screw) with a nut 14 and an electric motor 15. In the presented embodiment, the moving means for moving the heating plate 8 are used for moving the forming tool 5. Using the existing drive system is preferred because it does not significantly increase production costs. For this purpose, it is sufficient to attach the forming tool 5 to the heating plate 8, as is clearly visible in Fig. 3. The forming tool 5 is attached to a holder 17, which in turn is attached to the heating plate 8, e.g. to a frame or housing that secure the heating plate 8.

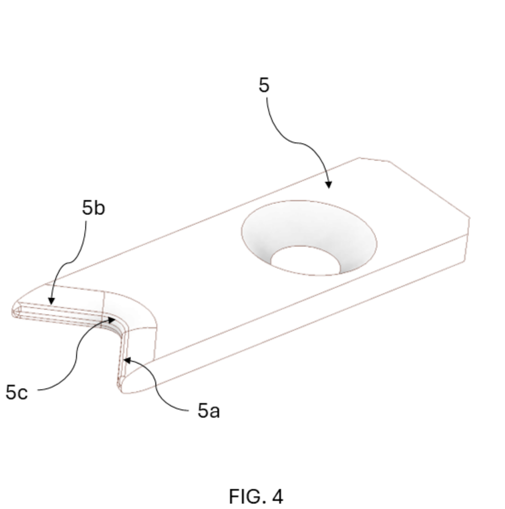

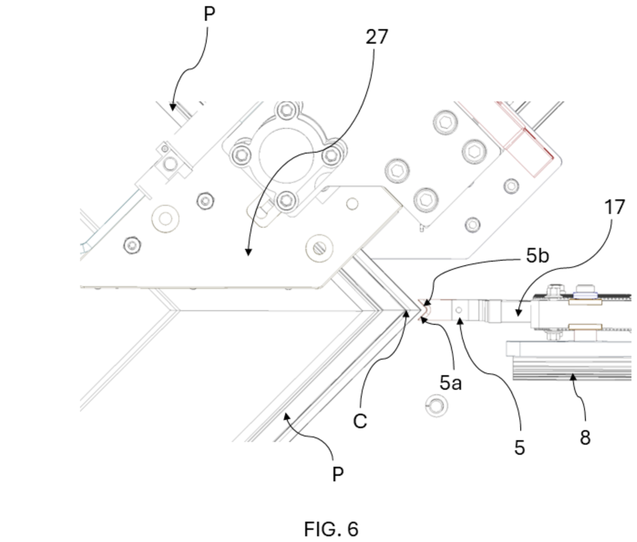

Figs. 4-6 illustrate a preferred embodiment of the forming tool 5 in more detail. The forming tool 5 comprises forming edges 5a, 5b arranged in the form of letter V. The forming edges 5a, 5b adhere to the surfaces of the outer side walls 4 in the area of the outer side corner C, when the two profile elements P are in contact with their end faces W. Fig. 6 shows a starting position of the forming tool 5 relative to the outer side corner C in a bottom view. Because there is a right angle between the said outer side walls 4, the best results are achieved when the forming edges 5a, 5b are also at the same angle. It is also preferred when the ends of the forming edges 5a, 5b join through a rounded section 5c in the shape of a section of a circle. As a result, the outer side corner C is smooth and slightly rounded.

As in the presented embodiment, the forming tool 5 is in the form of a flat plate terminated with the forming edges 5a, 5b. The forming edges 5a, 5b are preferably elongated surfaces of regular shape and small thickness, preferably between 0.1 mm and 10 mm. Too thick forming edges 5a, 5b could make forming of the plasticized material difficult. Thinner edges, especially sharp-edged ones, facilitate the removal of excess material and reduce frictional resistance as the forming tool 5 moves along the forming path T, i.e., along the outer side welding line L. Preferably, the forming edges 5a, 5b have a triangular, rectangular or circular shape in the cross section.

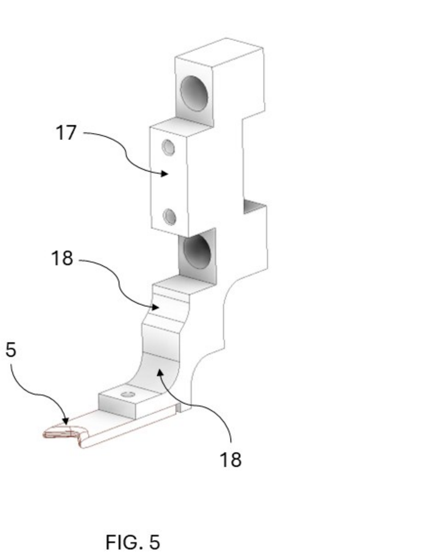

Fig. 5 illustrates a preferred embodiment of a holder 17, which is used to attach the forming tool 5. The holder 17 is attached to the heating plate 8, e.g. to a frame or housing that secure the heating plate 8, as clearly shown in Figs. 3 and 6. Preferably, the holder 17 has at least one additional forming surface 18 configured to form a weld in the area of the apex where the three edges of the profile element P converge. The additional forming surface 18 is a rounded and concave surface with respect to the outer side corner C being formed. It can be defined by a certain radius of curvature. Preferably, the additional forming surface 18 is a section of the lateral surface of the cylinder.

The forming tool 5 should be made of materials resistant to higher temperatures as it comes into contact with the plasticized material, the temperature of which can be higher than 100 degrees Celsius, and sometimes even above 200 degrees Celsius. Preferred materials are aluminium, metal alloys, ceramic material or carbide. Preferably, the forming tool 5 is coated with a high-temperature-resistant non-stick coating, e.g. a coating containing Teflon (PTFE).

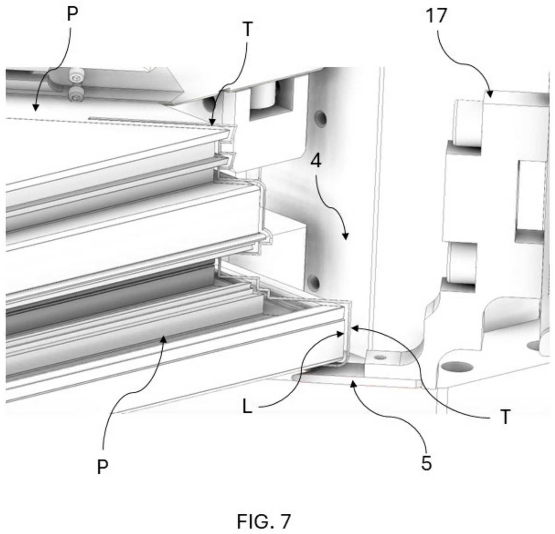

An exemplary forming path T is illustrated by a virtual line in Fig. 7. The forming tool 5 is visible in the starting position, beginning its travel with a short section along the adjoining front edges 1a. The forming tool is then moved along the outer side welding line L and completes its travel over a short distance along the adjoining rear edges 2a. In another embodiment, the forming path T of the forming tool 5 may only include a travel along all or part of the outer side welding line L.

Below a machine for welding plastic profile elements according to the second embodiment of the invention will be described. The detailed design and description of the operation is not illustrated or described, as such machines are well known in the art. Fig. 8 illustrates only a partial view of the machine without some components or their parts visible for better understanding and clarity.

A machine for welding profile elements generally comprises the following components:
a base frame (not shown);
a positioning and pressing system 19, 20 equipped with:
   holding members 21 configured to hold and stabilize the profile elements P during welding,
   drive means 22, 23 connected to the holding members 21 for moving the profile elements P between a first position, in which the end faces W of the profile elements P being welded are in contact with each other, and a second position in which the end faces W of the profile elements P being welded are spaced apart, and configured for pressing together the end faces W that have been heated;
   a heating module with a heating plate 8 configured to heat the end faces of the profile elements P to plasticize the material in their area;
   a main control unit configured to control the machine and comprising at least a processor and a memory;
   a weld forming device equipped with a forming tool 5 according to the first embodiment.

It will be obvious to those skilled in the art that the machine may be equipped with other mechanical, electrical, or electronic components not listed herein that are necessary for its proper operation.

Fig. 8 shows only one station, but the machine preferably comprises four stations, each station being equipped with a welding unit comprising at least a positioning and pressing system 19, 20 with holding members 21 and drive means 22, 23, a heating module with a heating plate 8, and forming tools 5. The operations at each station are controlled by the central control unit in a coordinated manner. In this way, all four corners can be welded simultaneously.

Preferably, the heating plate 8 comprises a first heating surface and a second heating surface parallel thereto. A heating element, e.g., a resistance wire, is placed between the first heating surface and the second heating surface.

The heating module may further comprise a vibration means, constituting a vibration generator module connected to the heating plate 8 and configured to cause the heating plate 8 to vibrate.. The heating module also includes drive means configured to move the heating plate 8 in at least one plane in order to insert and withdraw the heating plate 8 from between the end faces W of the profile elements P being joined. In the presented embodiment, the machine is equipped with moving means 6, 7 described in detail in the first embodiment, which are used to move the heating plate 8 and the forming tool 5.

The positioning and pressing system 19, 20 in the presented embodiment includes a positioning unit 19 and the pressing unit 20. The positioning unit 19 is configured to fasten the profile elements P and move them horizontally to bring the end faces W into contact. The positioning unit 19 includes a holding member 21 mounted on a support plate 25, which moves along a guide 24. The drive is provided by a drive screw 22 with a nut and an electric motor 23. The pressing unit 20 comprises a linear actuator 25 with a pressure plate 27, which cooperates with the holding members 21 to correctly position the end faces W relative to each other in the vertical plane. Preferably, the pressing unit 20 includes two linear actuators 26 and two pressure plates 27 that press the profile elements P from both the bottom and the top.

The welding unit may also be equipped with a forming punch that forms the flash and/or reduces the flow of plasticized material in the weld area. The forming punch may form the flash on the front walls, rear walls, outer side walls, or any combination thereof. For example, the forming punch may include a forming face and a pressing element, wherein the pressing element includes a vibration generator module configured to cause the forming face to vibrate. Preferably, the welding unit includes two oppositely operating forming punches that are located in a plane perpendicular to the main plane of the window or door frame. For example, the forming punches may only preform the outer side corner, and the weld forming device according to the first embodiment may later finish the forming or correct imperfections. Alternatively, the forming punches may only form the weld along the front edges and rear edges, and the forming tool forms the weld in the area of the outer side corner, i.e., the outer side edges.

The forming tool 5 is attached to the heating plate 8 as described and illustrated in Figs. 2, 3 and 5.

The machine may also comprise cooling means configured to cool the previously formed weld.

According to a third embodiment, a method is provided for welding plastic profile elements, especially window or door frames, comprising the following steps performed by a machine according to the second embodiment using a weld forming device according to the first embodiment:
a) placing the profile elements in a positioning and pressing system 19, 20,
b) inserting a heating plate 8 between the end faces W of the profile elements P being joined,
c) pressing the profile elements P against the heating plate 8,
d) moving the profile elements P apart and withdrawing the heating plate 8,
e) bringing the heated end faces W into contact with a predefined force,
f) forming a weld using at least one forming tool 5, wherein:
   f.1) a forming tool 5 is moved so that forming edges 5a, 5b adhere to the surface of the outer side walls 4 in the area of the outer side corner C,
   f.2) a forming tool 5 is moved along a forming path T defined by the outer side welding line L until the desired weld is formed and/or the micro-gaps between the outer side edges 4a are closed.
g) cooling the weld,
h) releasing holding members 21 of the positioning and pressing system 19, 20 and removing the welded profile elements P.

Preferably, at least step f.2) is performed when the temperature of the materials being joined, in the area of the weld being formed, is in the range of 120-140 degrees Celsius.

## Claims

1. A weld forming device for joining plastic profile elements, especially window or door frames, wherein said profile elements (P) comprise:
an end face (W) formed by cutting one end of a profile element (P), preferably at a 45-degree angle, wherein said end face (W) is determined by:
an inner side edge (3a) on the inner perimeter of the window or door frame and an outer side edge (4a) on the outer perimeter of the window or door frame, said inner side edge (3a) and outer side edge (4a) extending substantially perpendicular to the main plane of the assembled window or door frame,
a front edge (1a) and a rear edge (2a) extending substantially parallel to the main plane of the assembled window or door frame,
wherein when the two profile elements (P) are in contact with their end faces (W), the surfaces of the outer side walls (4) form an outer side corner (C) while the outer side edges (4a) define an outer side welding line (L);
a front wall (1) and a rear wall (2), which extend substantially in the main plane of the assembled window or door frame;
an inner side wall (3) on the inner perimeter of the assembled window or door frame and an outer side wall (4) on the outer perimeter of the assembled window or door frame, said inner side wall (3) and outer side wall (4) extending substantially perpendicular to the main plane of the assembled window frame;
wherein said device comprises:
a forming tool (5) for forming a weld;
moving means (6, 7) configured to move the forming tool (5) at least in the X and Y axes of the Cartesian coordinate system;
a control unit configured to control the forming device and comprising at least a processor and a memory;
**characterized in that**
the forming tool (5) comprises forming edges (5a, 5b) configured to adhere to the surfaces of the outer side walls (4) in the area of the outer side corner (C) when the two profile elements (P) are in contact with their end faces (W),
wherein the control unit is configured to move the forming tool (5) along a forming path (T) defined by the outer side welding line (L).

2. The weld forming device according to claim 1, **wherein** the forming edges (5a, 5b) extend in a V-shape, preferably at a right angle.

3. The weld forming device according to either claim 1 or 2, **wherein** the forming edges (5a, 5b) have a triangular, rectangular, or circular shape in the cross-section.

4. The weld forming device according to either claim 1 or 2 or 3, **wherein** the forming tool (5) is in the form of a flat plate terminated with the forming edges (5a, 5b).

5. The weld forming device according to any of the preceding claims 1-4, **wherein** the forming tool (5) is made of aluminium or high-temperature-resistant metal alloys, or a ceramic material or carbide, or any combination thereof.

6. The weld forming device according to any of the preceding claims 1-5, **wherein** the forming tool (5) is coated with a high-temperature-resistant non-stick coating, preferably containing Teflon (PTFE).

7. The weld forming device according to any of the preceding claims 1-6, **wherein** the control unit comprises the forming path (T) stored in the memory.

8. The weld forming device according to any of the preceding claims 1-7, **characterized in that** the moving means (6, 7) are in the form of servo drives or linear actuators.

9. A machine for welding plastic profile elements, especially window or door frames, comprising:
a base frame;
a positioning and pressing system (19, 20) equipped with:
holding members (21) configured to hold and stabilize profile elements (P) during welding,
drive means (22, 23) connected to the holding members (21) for moving the profile elements (P) between a first position in which the end faces (W) of the profile elements (P) being welded are in contact with each other, and a second position in which the end faces (W) of the profile elements (P) being welded are spaced apart, and configured to press together the end faces (W) that have been heated;
a heating module with a heating plate (8) configured to heat the end faces (W) of the profile elements (P) to plasticize the material in their area;
a main control unit configured to control the machine for welding and comprising at least a processor and memory;
a weld forming device as defined in any of claims 1-8.

10. The machine according to claim 9, **wherein** it comprises a vibration source in the form of a vibration generator, preferably attached to the heating module.

11. The machine according to claim 9 or 10, **wherein** the forming tool (5) is attached to the heating module, preferably to the heating plate (8).

12. The machine according to any of claims 9-11, **wherein** it comprises cooling means adapted to cool the previously formed weld.

13. A method of welding plastic profile elements, in particular window or door frames, using a weld forming device according to any of claims 1-8, in which method at least two profile elements (P) are welded said profile elements comprising:
an end face (W) formed by cutting one end of a profile element (P), preferably at a 45-degree angle, wherein said end face (W) is determined by:
an inner side edge (3a) on the inner perimeter of the window or door frame and an outer side edge (4a) on the outer perimeter of the window or door frame, said inner side edge (3a) and outer side edge (4a) extending substantially perpendicular to the main plane of the assembled window or door frame,
a front edge (1a) and a rear edge (2a) extending substantially parallel to the main plane of the assembled window or door frame,
wherein when the two profile elements (P) are in contact with their end faces (W), the surfaces of the outer side walls (4) form an outer side corner (C) and the outer side edges (4a) define an outer side welding line (L);
a front wall (1) and a rear wall (2), which extend substantially in the main plane of the assembled window or door frame;
an inner side wall (3) on the inner perimeter of the assembled window or door frame and an outer side wall (4) on the outer perimeter of the assembled window or door frame, said inner side wall (3) and outer side wall (4) extending substantially perpendicular to the main plane of the assembled window or door frame;
wherein said method comprises at least the step of heating the end faces (W) until the material in their area is plasticized and pressing the heated end faces (W) together or only the step of heating the previously joined profile elements (P) in the area of the outer side corner (C),
**characterized in that** it comprises the following substeps:
f.1) moving a forming tool (5) so that forming edges (5a, 5b) adhere to the surface of the outer side walls (4) in the area of the outer side corner (C),
f.2) moving a forming tool (5) along the forming path (T) defined by the outer side welding line (L) until the desired weld is formed and/or the micro-gaps between the outer side edges (4a) are closed.

14. The method according to claim 13, **wherein** it comprises the following steps performed by using a machine defined in claims 9-12:
a) placing the profile elements in a positioning and pressing system (19, 20),
b) inserting a heating plate (8) between the end faces (W) of the profile elements (P) being joined,
c) pressing the profile elements (P) against the heating plate (8),
d) moving the profile elements (P) apart and withdrawing the heating plate (8),
e) bringing the heated end faces (W) into contact with a predefined force,
f) forming a weld using the at least one forming tool (5),
g) cooling the weld,
h) releasing holding members (21) of the positioning and pressing system (19, 20) and removing the welded profile elements (P),
**wherein** in step f) substeps f.1) and f.2) are performed.

15. The method according to either claim 13 or 14, **wherein** at least step f.2) is performed when the temperature of the materials being joined in the area of the weld being formed is in the range of 120-140 degrees Celsius.
